# EUROPEAN PATENT APPLICATION

(11) **EP 1 365 407 A1**
(43) Date of publication of application: **26.11.2003**
(21) Application number: 02701601.3
(22) Date of filing: 27.02.2002
(51) Int. Cl.: G11B 21/02

(54) **DISK DRIVE DEVICE**

(30) Priority: 01.03.2001 JP 2001056410; 15.08.2001 JP 2001246388
(71) Applicant: Citizen Watch Co., Ltd., Tokyo 188-8511 (JP)
(72) Inventor: TAKAHASHI, Shoji, c/o Citizen Watch Co., Ltd., Nishitokyo-shi, Tokyo 188-8511 (JP); WAKITA, Maki, c/o Citizen Watch Co., Ltd., Nishitokyo-shi, Tokyo 188-8511 (JP); KOHYAMA, Takuro, c/o Citizen Watch Co., Ltd., Nishitokyo-shi, Tokyo 188-8511 (JP)
(74) Representative: Mounteney, Simon James
(86) International application number: JP0201805
(87) International publication number: WO02071404

(57) **Abstract**

Even after a carriage (8) of a disc drive unit is moved to a stop position, a screw shaft (22) continues to rotate, thereby compressing a spring (25) to advance an anchor member (21) in engagement with the screw shaft (22). Thereupon, a guide bar (24), which is integral with the anchor member (21) and in engagement with a carriage supporting portion (23), moves, so that a lock mechanism is actuated to unlock a tray from a body frame.

## Description

### TECHNICAL FIELD

The present invention relates to a disc drive unit that can be loaded with and drive an information recording disc, such as a compact disc (CD) or digital video disc (DVD), and serves to read and write information.

### BACKGROUND ART

Usually, a disc drive unit for driving a disc such as a CD or DVD is composed of a tray and a body frame, and has therein a disc rotation driver and a carriage driver, which moves an optical or magnetic recording/reproducing head and a carriage provided with the head in the radial direction of the disc. The tray can be manually pushed into and drawn out of the body frame so that disc can be loaded into and unloaded from the disk drive unit.

The disk drive unit described above is designed so that the tray is locked in a position (drive position) in which the disc is set if the tray is pushed into the body frame. In drawing out the tray, a button on the unit is externally depressed to unlock the tray from the body frame. In a type such that the head is provided on the tray side, the tray should preferably be drawn out after the head is returned to a fixed point (position on the outer periphery of a recording area of the disc for the next operation) on the outer periphery of the disc in the radial direction. To facilitate the tray to be drawn out, the tray is designed so that it can be slightly projected from the body frame by means of a spring which has been compressed since the unlocked tray was pushed in.

Among structures such that the tray is unlocked from the body frame by depressing the button on the body frame, there is one in which a dedicated solenoid is used and energized when the depression of the external button is detected so that a lock mechanism is actuated by means of its magnetic force of attraction. In the structure that uses the dedicated solenoid to unlock the tray, however, a space for the location of the solenoid must be secured in the unit, thus constituting a hindrance to the miniaturization of the unit. Further, the unit requires an increased number of components, which are disadvantageous to its cost and weight.

Described in Japanese Patent Application Laid-Open No. 10-269666, therefore, is the way of utilizing a carriage drive mechanism to unlock a tray. When a head on a carriage in this unit reaches a certain position beyond a fixed point in an outer peripheral position of a disc in the radial direction, an ejector projection on the carriage rotates a lock lever to unlock the tray. In this unit, the lock lever is actuated directly by means of the carriage, so that the carriage must be moved to a position outside the recording area of the disc. Thus, the movement stroke of the carriage must be lengthened, which prevents the unit from being downsized.

Described in Japanese Patent Application Laid-Open No. 2000-90532, moreover, is a disk drive unit in which a carriage that is in engagement with a screw shaft is moved in the radial direction of a disc by rotating the screw shaft. In this unit, the screw shaft and a tray that is fitted with the carriage are unlocked from a body frame by moving the screw shaft in its axial direction with respect to the tray.

In this disk drive unit, a motor for rotating the screw shaft still continues drive to move the screw shaft in the axial direction after the fixed point is reached by the head. The distal end of the screw shaft causes the lock lever to rotate. Thus, a structure for stopping the movement of the carriage and holding it in a fixed position (fixed point on the outer peripheral side of the disc) without stopping the rotation of the screw shaft and a structure for moving the screw shaft in the axial direction without disengaging the motor and a gear train are complicated.

The following system is described in Japanese Patent Application Laid-Open No. 61-292260. If a disc takeout button is depressed in this system, a motor that serves for both disc loading and head feed drive is driven to advance a rack, so that the lock lever is rotated, whereupon the lock lever and a lock post that protrudes from a tray are disengaged from each other. This rack serves for both carriage feed drive and disc loading/unloading drive. The motor continues drive further to advance the rack even after a given position is reached by a head, and is stopped when the lock lever and the lock post are disengaged from each other.

This unit uses a plurality of levers for converting a linear motion of the rack into a motion for disengaging the lock lever and the lock post and springs for urging the levers individually in given directions of rotation, so that a structure for locking the tray to a body frame is complicated.

Described in Japanese Patent Application Laid-Open No. 5-128751, moreover, is an arrangement such that a stopper member for positioning a disc is locked by linearly moving a worm member in engagement with a rack member having a head fixed thereon, thereby rotating a lock member.

In this unit, a motor is driven to move the head (rack member) along guide rails. If the motor is further driven after a limit of movement (innermost peripheral position) is reached by the head, the worm member is driven linearly by reaction against the engagement between the rack member and the worm gear. This movement of the worm member causes the lock member to rotate, thereby locking the stopper member.

In this unit, a power transmission system between the rack member and the motor is complicated, and a mechanism for driving the worm member linearly is also complicated because of the reaction against the engagement between the rack member and the worm gear.

### DISCLOSURE OF THE INVENTION

The object of the present invention is to provide a disc drive unit having a simple mechanism for unlocking a tray with power from a motor for driving a carriage.

In order to achieve the above object, a disc drive unit according to the present invention comprises a body frame, a tray provided on the body frame so as to be movable between an unloaded position and a loaded position, a lock mechanism for locking the tray in the loaded position or unlocking the tray so as to allow the tray to move to the unloaded position, a screw shaft has a spiral groove and is driven by a motor to rotate, a head which is driven by the rotation of the screw shaft and moves in the radial direction of the disc-shaped recording medium, with an engaging member in engagement with the spiral groove positioned and held in a given position by an elastic member, and records information in or reproduces information from the disc-shaped recording medium, and a stopper member for restraining movement of the head. The lock mechanism is unlocked by rotating the screw shaft after the head abuts against the stopper member to be restrained from moving, and displacing the engaging member against the urging force of the elastic member.

Preferably, the lock mechanism is composed of a plurality of operation members attached to the tray. The individual operation members are connected through connecting members so that they can operate in association with one another. These operation members further include one drive operation member adapted to operate when driven by a drive mechanism and one anchor operation member adapted to anchor the tray in the loaded position when in engagement with an anchor member provided on the body frame.

Further, a disc drive unit according to the present invention comprises a body frame, a tray provided on the body frame so as to be movable between an unloaded position and a loaded position, and a lock mechanism for locking the tray in the loaded position or unlocking the tray so as to allow the tray to move to the unloaded position. The lock mechanism has a plurality of operation members attached to the tray, the individual operation members are connected through connecting members so that they can operate in association with one another. These operation members include at least one drive operation member adapted to operate when driven by means drive means and at least one engaging operation member adapted to anchor the tray in the loaded position when in engagement with an anchor member on the body frame.

Further, a disc drive unit according to the present invention comprises a body frame, a tray provided on the body frame so as to be movable along guide rails between an unloaded position and a loaded position, a lock mechanism for locking the tray in the loaded position or unlocking the tray so as to allow the tray to move to the unloaded position, and a spring member for urging the tray toward the unloaded position. Furthermore, the lock mechanism and the spring member are arranged individually on the opposite sides with respect to the center of rotation of the disc-shaped recording medium.

### BRIEF DESCRIPTION OF THE DRAWINGS

FIG. 1 is a plan view of a disc drive unit according to a first embodiment of the present invention;
FIG. 2 is a plan view showing a component attached to a sub-chassis of the disc drive unit of FIG. 1;
FIG. 3 is a perspective view showing a carriage drive mechanism in the disc drive unit of FIG. 1;
FIG. 4 is an enlarged view of a portion near an engaging member in the carriage drive mechanism shown in FIG. 3;
FIG. 5 is a plan view of a disc drive unit according to a second embodiment of the present invention;
FIG. 6 is a plan view showing a drive mechanism and a lock mechanism in the disc drive unit of FIG. 5;
FIG. 7 is a plan view showing a tray of the disk drive unit of FIG. 5 pushed in a body frame;
FIGS. 8A and 8B are a plan view and a side view, respectively, schematically showing only an associated portion of a modification of the disk drive unit shown in FIG. 7; and
FIGS. 9A, 9B and 9C show first, second, and third modifications, respectively, separate from the lock mechanism shown in FIG. 6.

### BEST MODE FOR CARRYING OUT THE INVENTION

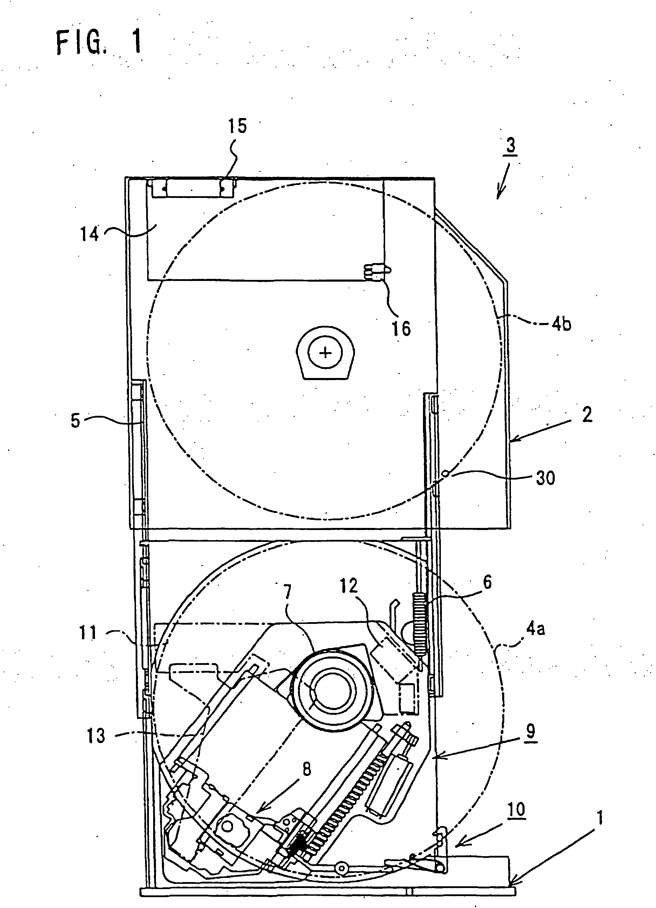

A disc drive unit according to a first embodiment of the present invention will first be described with reference to FIGS. 1 to 4.

A disc drive unit 3 comprises a body frame 2 and a tray 1 that is attached to the body frame 2 for movement between an unloaded position and a loaded position. FIG. 1 shows a state (unloaded position) in which the tray 1 is drawn out of the body frame 2. The disc drive unit 3 is incorporated in a host apparatus such as a microcomputer.

In FIG. 1, a chain-line circle designated by numeral 4a represents a disc-shaped recording medium (hereinafter referred to as disc) on the tray 1 that is drawn out of the body frame 2 and situated in the unloaded position. On the other hand, a chain line designated by numeral 4b represents the disc on the tray 1 that is pushed into the body frame 2 and situated in the loaded position.

Rail-shaped linear guides 5 are arranged individually on the left- and right-hand sides between the tray 1 and the body frame 2. The tray 1 can be pushed into or drawn out of the body frame 2 along these linear guides 5.

A spring 6 for pushing out the tray 1 is arranged in the end portion of the tray 1 on the push-in-side. When the tray 1 is pushed into the body frame 2, the distal end of the spring 6 runs against that sidewall of the body frame 2 on the side where the tray 1 moves toward the loaded position, whereupon the spring 6 is compressed. In drawing out the tray 1 from the body frame 2, the elastic force of the compressed spring 6 acts and pushes the tray 1 out.

The tray 1 is provided with a turntable 7 for the drive of the a disc 4, carriage 8, carriage drive mechanism 9, lock mechanism 10, motor circuit 11, motor driver 12, and FPC (flexible printed circuit) 13 for transmitting read information to the host apparatus (microcomputer). The turntable 7 is connected directly to a spindle motor (not shown).

The body frame 2 is provided with a main circuit 14, connector 15, and micro switch 16. The main circuit 14 includes a control circuit for managing the whole structure of the disc drive unit 3 and a control-transmission circuit for delivering the read information to the host apparatus, and is connected to the host apparatus through the connector 15. When the tray 1 is pushed into the body frame 2, moreover, the micro switch 16 is actuated to inform of the fact that the disc 4 is in its drive position.

The carriage 8 and the carriage drive mechanism 9 are arranged on a sub-frame 17 that is mounted on the tray 1. The carriage 8 has an optical recording/reproducing head 18.

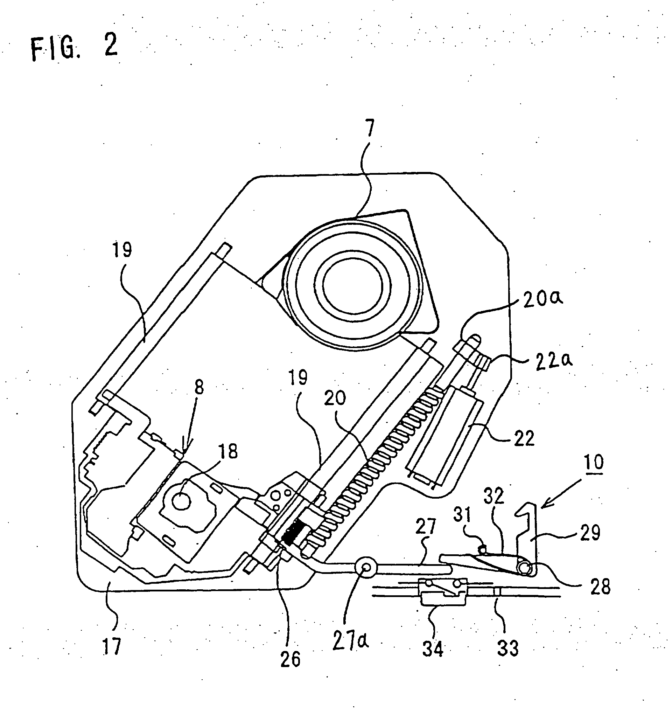

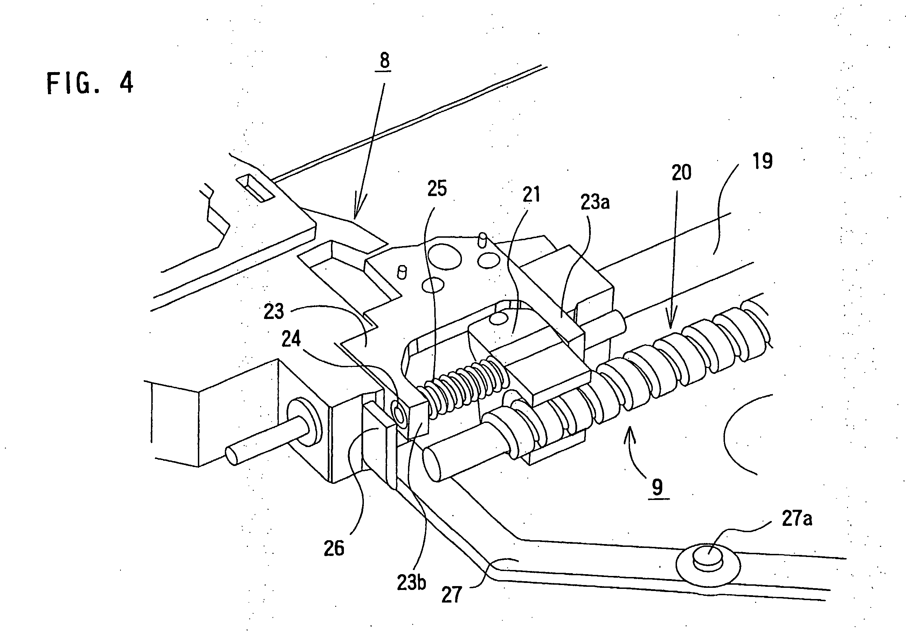

As shown in FIG. 2, as the left- and right-hand supporting portions (right-hand supporting portion is denoted by numeral 23 in FIG. 4) of the carriage 8, formed integrally projecting from on the opposite sides of the carriage 8, engages the guide shafts 19 arranged parallel to each other on the opposite sides, left and right, of the sub-frame 17, the carriage 8 is supported by guide shafts 19 and can slide along the guide shafts 19 (that is, toward or away from the turntable 7).

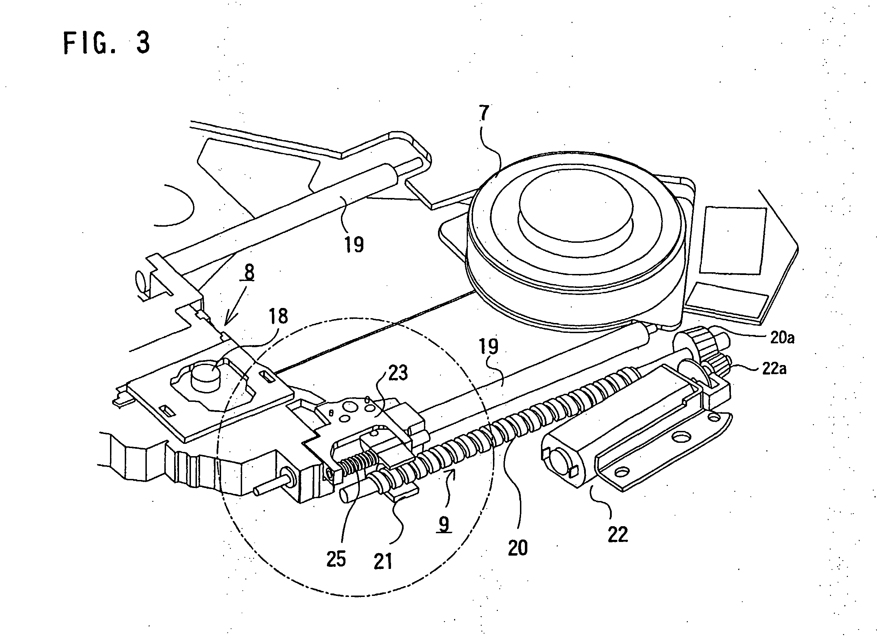

As shown in FIG. 3, the carriage drive mechanism 9 includes a screw shaft 20, an engaging member 21, and a carriage drive motor 22.

The screw shaft 20 is rotatably supported on the tray 1 outside the pair of guide shafts 19 and parallel to the guide shafts 19. Further, the carriage drive motor 22 is fixed to the tray 1. A gear 22a of the carriage drive motor 22 and a gear 20a that is fixed to one end of the screw shaft 20 are always in mesh with each other.

As shown in FIG. 1, one end of the screw shaft 20 that is provided with the gear 20a is placed on the inner peripheral side of the disc 4a, and its other end that is interlocked with the lock mechanism 10 is placed on the outer peripheral side of the disc 4a. This arrangement makes it easy to disengage the lock mechanism by manual operation from outside the unit in case of emergency such as service interruption.

As shown in FIG. 4, the supporting portion 23 that is formed projecting on the right-hand side of the carriage 8 is substantially C-shaped, having a pair of supporting pieces 23a and 23b that project sideways. The supporting pieces 23a and 23b are formed individually having through holes that receive a guide bar 24 integral with the engaging member 21 for sliding motion.

The engaging member 21 is arranged between the supporting pieces 23a and 23b and is always in engagement with the screw shaft 20. When the screw shaft 20 rotates, the engaging member 21 and the guide bar 24 integral therewith move parallel to the axis of the screw shaft 20 with respect to the screw shaft 20.

A spring 25 is fitted on the guide bar 24 between the supporting piece 23b on the tray draw-out side and the engaging member 21. The spring 25 continually urges the engaging member 21 toward the supporting piece 23a on the tray push-in side.

As shown in FIG. 3, the spring 25 is arranged utilizing the space between the guide shaft 19 and the screw shaft 20, so that any special space for the spring 25 is not required.

The distal end of the guide bar 24 that projects outward from the hole in the supporting piece 23b on the tray draw-out side is opposed to a riser piece 26 on one end of an operating lever 27 (mentioned later) that constitutes the lock mechanism 10.

The lock mechanism 10 is composed of the operating lever 27 and an L-shaped lever 29, which are provided on the tray 1, as shown in FIG. 2, and a retaining pin 30 (FIG. 1) provided on the body frame 2.

As shown in FIG. 2, the lock mechanism 10 is arranged apart from the motor 22 and the gear train (gears 20a and 22a) as its power transmitting means, so that the unit can be downsized.

The L-shaped lever 29 is rotatably supported on a shaft 28 the central portion of which is fixed to the tray 1. One end of the lever 29 abuts against the operating lever 27, and the other end engages the retaining pin 30. Further, the L-shaped lever 29 is urged in the counterclockwise direction around the shaft 28 shown in FIG. 2 by means of a spring 32, which is fixed on the shaft 28 and has one end anchored to a pin 31 fixed to the tray 1 and the other end in engagement with the L-shaped lever 29.

A cover portion of the tray 1 is provided with a through hole 33 and an eject button 34. If compulsory ejection is needed, a pin (not shown) is inserted in the tray push-in direction through the through hole 33, whereupon the L-shaped lever 29 is rotated in the clockwise direction (release direction) against the elastic force of the spring 32. If the eject button 34 is externally manually pressed, moreover, an associated micro switch is activated so that its output signal is transmitted to the main circuit 14, whereupon tray draw-out operation (mentioned later) is started.

The disc 4a is placed on the turntable 7 of the tray 1, and the tray 1 is pushed into the body frame 2. When the tray 1 is fully pushed in, the L-shaped lever 29 of the lock mechanism 10 abuts against the retaining pin 30 formed on the body frame 2, then temporarily rotates in the clockwise direction against the elastic force of the spring 32, and then returns. Thereupon, a hook portion on its distal end engages the retaining pin 30 (FIG. 1) of the body frame. The engagement between the L-shaped lever 29 and the retaining pin 30 is maintained by means of the elastic force of the spring 32. Thus, the tray 1 is locked to the body frame 2.

As the tray 1 reaches the position where it is locked to the body frame 2, the micro switch 16 (FIG. 1) is activated to drive the spindle motor. In consequence, the turntable 7 rotates, so that the disc 4b in its drive position rotates. As this is done, the spring 6 provided on the tray 1 is kept compressed by the body frame 2.

In response to a command for information readout delivered from the host apparatus through the connector 15, the carriage drive motor 22 is driven to rotate the screw shaft 20 by the main circuit 14, motor circuit 11, and motor driver 12. Thereupon, the carriage 8 is moved in the radial direction of the disc 4 along the guide shafts 19 through the engaging member 21 that engages the screw shaft 20. In consequence, necessary information is read from the disc 4b by the head 18.

As this is done, the engaging member 21 that is in engagement with the screw shaft 20 which is rotating never compresses the spring 25 fitted on the guide bar 24 that is integral with the engaging member 21.

In taking out the disc 4b from the tray 1, the eject button 34 (FIG. 2) is depressed to activate the associated micro switch. Thereupon, its output signal is transmitted to the main circuit 14 to stop the information readout operation. Then, the carriage drive motor 22 is driven to rotate the screw shaft 20, thereby moving the carriage 8 to the outer peripheral side of the disc 4. Thereupon, the carriage 8 reaches the respective end portions of the guide shafts 19 on the tray draw-out side, and soon abuts against the sub-frame 17 and stops in the corresponding position. The sub-frame 17 serves as a stopper for the carriage 8. When the carriage 8 reaches the stop position, the head 18 reaches a fixed point on the outer peripheral side of the disc 4 in the radial direction.

As mentioned before, the sub-frame 17 restrains the carriage 8 from moving toward the outer periphery of the disc. According to the World Standards, basic information for head seek is carried on the innermost peripheral side of the disc. Normally, therefore, the head is kept on standby on the innermost peripheral side of the disc in order to increase the processing speed. In case any shock is then applied to the unit 3, the engaging member 21 can be prevented from shifting its position and causing wrong operation of the lock mechanism 10 if the point of contact between the engaging member 21 and the lock mechanism 10 is situated on the outer peripheral side of the disc.

The main circuit 14 continues to drive the carriage drive motor 22 even after the carriage 8 is stopped in the stop position. Thus, the screw shaft 20 continues to rotate even after the carriage 8 is stopped, so that the engaging member 21 that is in engagement with the screw shaft 20 compresses the spring 25 as it further moves to the tray draw-out side.

Thereupon, the guide bar 24, which is integral with the engaging member 21, moves and runs against the riser piece 26 provided on the operating lever 27 at one end thereof, thereby causing the operating lever 27 to rotate in the counterclockwise direction around a pivot 27a. This rotating motion of the operating lever 27 causes the L-shaped lever 29 to rotate in the clockwise direction around the shaft 28. In consequence, the L-shaped lever 29 and the retaining pin 30 of the body frame 2 are released from engagement (i.e., locking of the tray 1 to the body frame 2 is released).

As described above, the spring 25 is compressed and reduced in length when the tray 1 is unlocked. Therefore, the size of the unit can be made small, as compared with a type in which the spring is extended when the tray is unlocked.

The unlocked tray 1 is pushed in the tray draw-out direction by the compression spring 6 (FIG. 1), whereupon it partially projects from the body frame 2. By further manually drawing out this projected tray 1, the disc 4a can be taken out of the tray 1 (or from the turntable 7).

If the tray 1 is manually pushed in toward the body frame 2 again, the micro switch 16 is activated in response to the push-in operation, whereupon the main circuit 14 drives the carriage drive motor 22. The direction of this rotation of the carriage drive motor 22 is opposite to the direction of the aforesaid rotation of the carriage drive motor 22 that is driven as the eject button 34 is depressed to take out the disc 4 from the tray 1. This rotation of the carriage drive motor 22 first causes the engaging member 21 (that compresses the spring 25) to move toward the supporting piece 23a of the supporting portion 23 on the tray push-in side. After the engaging member 21 touches the supporting piece 23a, the rotation causes the carriage 8 to move. Thus, the movement of the carriage 8 starts at the aforesaid fixed point.

In drawing out the tray 1, according to the above description, the lock mechanism 10 is operated to unlock the tray 1 from the body frame 2 by moving the engaging member 21 in the tray draw-out direction with respect to the carriage 8 without moving the head 18 of the carriage 8 from the fixed point on the outer periphery of the disc 4 in the radial direction. Thus, driving the disc 4 next time requires no operation to cause the head 18 to return to the fixed point. As this is done, moreover, the screw shaft 20 itself only continues to rotate in the same normal position without changing its position relative to the gear train of the carriage drive motor 22.

In another embodiment, the stopper for the carriage 8 may be provided on the tray 1, not on the sub-frame 17, and formed having a screw structure such that its longitudinal projection is adjustable so that the stop position of the carriage 8 can be finely adjusted.

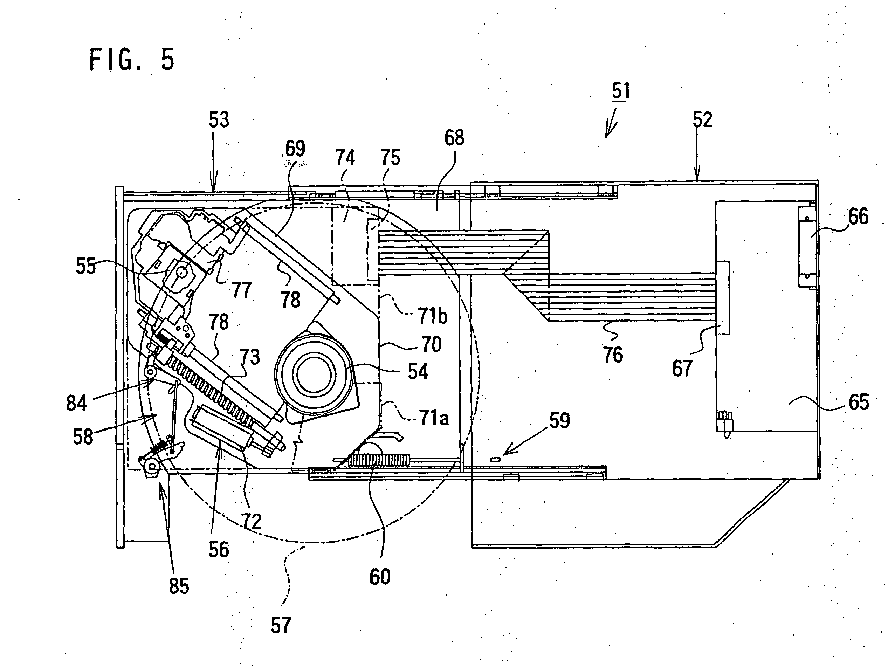

A disc drive unit according to the second embodiment of the present invention will now be described with reference to FIGS. 5 to 9C.

A disc drive unit 51 shown in FIG. 5, which is incorporated in a host apparatus (not shown) such as a notebook-type personal computer, comprises a body frame 52 and a tray 53. The disc drive unit 51 shown in FIG. 5 is cleared of its top lid.

The body frame 52 is a press-molded steel plate, and has a protrusion 59 formed on the right-hand region of its end portion on the tray draw-out side. A main circuit board 65 is mounted on the body frame 52 at the end portion on the tray push-in side. The main circuit board 65 has a first connector 66 for connection with the host apparatus in which the disc drive unit 51 is incorporated and a second connector 67 for connection with the tray 53 of the disc drive unit 51.

In the tray 53, a thread chassis 69 is fixed to a plastic base 68 by fitting, and an ejector spring 60 is arranged on the right of the end portion on the tray push-in side. Numeral 57 denotes a disc.

The thread chassis 69 is composed of a plastic thread base 70 and upper and lower covers 71 and 71b. A spindle motor 54, a head 55 and a head drive mechanism 56 are mounted on the thread base 70. These elements are covered by the upper and lower covers 71a and 71b. The upper cover 71a covers the greater pat of the thread base 70 except a portion corresponding to the movement path of the head 55. In FIG. 5, however, only a part of the upper cover 71a is indicated by a chain line. On the other hand, a sub-circuit board 74 is mounted on the lower cover 71b. A tray-side connector 75 is attached to the sub-circuit board 74.

The second connector 67 of the main circuit board 65 attached to the body frame 52 and the connector 75 of the sub-circuit board 74 attached to the tray 53 are connected through a flexible flat cable 76 (FFC).

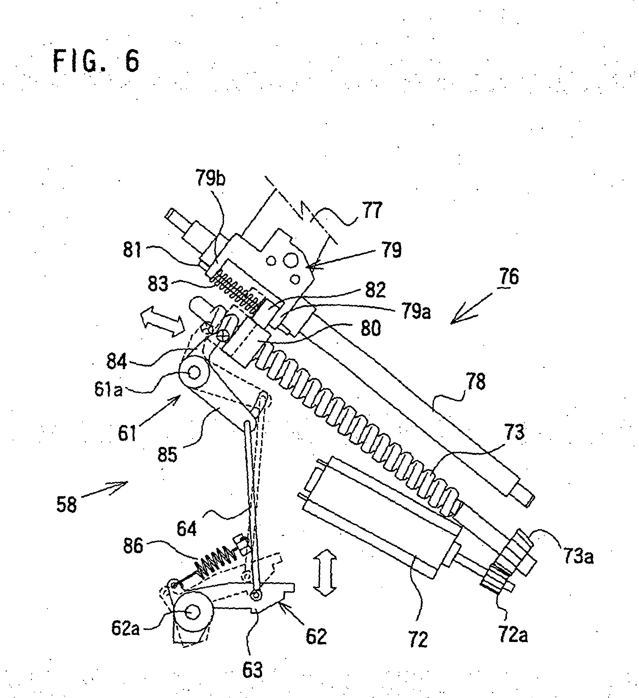

As shown in FIG. 6, the head drive mechanism 56 is composed of a thread motor 72, a feed screw (thread) 73, a head base 77 that fixes the head 55, and a pair of guide rods 78 that extend parallel to the feed screw (thread) 73. The head base 77 can slide along the guide rods 78 in a manner such that linkage portions 79 formed on its left- and right-hand sides engage the guide rods 78.

A gear 72a of the thread motor 72 and a gear 73a fixed to one end of the feed screw 73 are always in mesh with each other.

As shown in FIG. 6, the right-hand linkage portion 79 of the head base 77 is substantially in the shape of a C, having a pair of support pieces 79a and 79b that project sideways. A rod 81 is stretched parallel to the feed screw 73 between the support pieces 79a and 79b. A junction 82 of a slider (engaging member) 80 is slidably fitted on the rod 81. Further, a spring 83 is fitted on the rod 81 between the junction 82 of the slider 80 and the support piece 79b on the tray draw-out side.

As shown in FIG. 5 and other drawings, the spring 83 is arranged in a space between the guide rod 78 and the feed screw 73, so that it is unnecessary to provide any special space for the spring 83.

As shown in FIG. 6, a lock mechanism 58 is composed of a first lever (drive operation member) 61, a second lever (anchor operation member) 62, a wire (connecting member) 64 for connecting the first and second levers 61 and 62, and the protrusion 59 formed on the body frame 52.

As shown in FIG. 6, the lock mechanism 58 is arranged apart from the motor 72 and the gear train (gears 72a and 73a) as its power transmission means, so that the unit can be downsized.

As shown in FIG. 5, one end of the feed screw 73 that is provided with the gear 73a is placed on the inner peripheral side of the disc 57, and its other end that is interlocked with the lock mechanism 58 is placed on the outer peripheral side of the disc 57. This arrangement makes it easy to disengage the lock mechanism by manual operation from outside the unit in case of emergency such as service interruption.

As shown in FIG. 6, the first lever 61 is L-shaped, and its central portion is rotatably supported by a shaft 61a that is fixed to the base 68 of the tray 53. One end portion 84 of the first lever 61 is provided with a roller, and the other end portion 85 is connected with a wire 64. When the head 55 is situated in a position corresponding to the outer periphery of the disc 57, the roller of the first lever 61 is in contact with the slider 80.

One end of the second lever 62 is rotatably supported by a shaft 62a that is fixed to the base 68 of the tray 53, and its other end (free end) is formed having an engaging claw 63. One end of the second lever 62 is urged in the clockwise direction around the shaft 62a, that is, in a direction such that the engaging claw 63 may engage the protrusion 59 formed on the body frame 52, by a spring 86 that is fixed to the base 68 of the tray 53.

The other end portion 85 of the first lever 61 and the other end of the second lever 62 are connected through the wire 64. When the second lever 62 is urged in the clockwise direction by the elastic force of the spring 86, therefore, the first lever 61 is urged in the clockwise direction by the wire 64, whereupon the roller of the first lever 61 abuts against the slider 80.

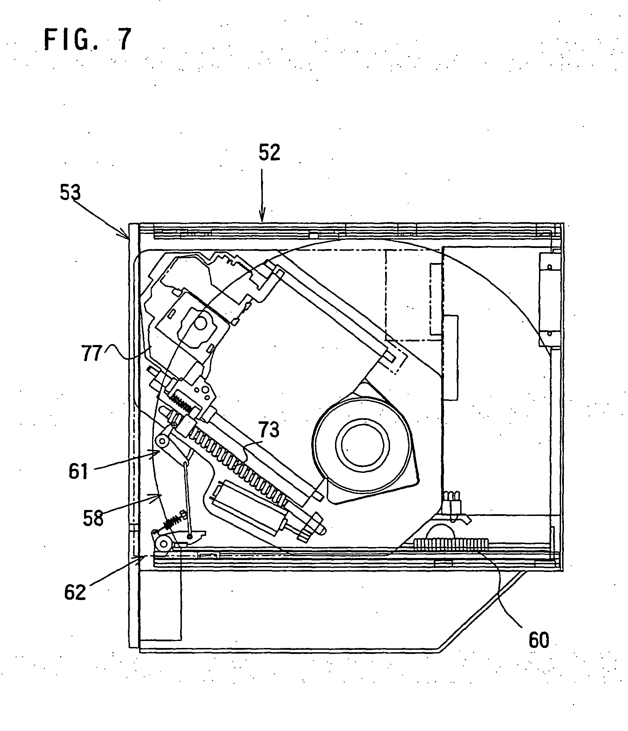

When the tray 53 is drawn out of the body frame 52 (FIG. 5), the head 55 is moved to the outer peripheral side in the radial direction of the disc 57. In this state, the slider 80 that is in engagement with the feed screw 73 is situated in a position at a short backward distance from the position where it is advanced farthest on the tray draw-out side. If the tray 53 is pushed into the body frame 52 when the head 55 is in this position, the engaging claw 63 of the second lever 62 meets and engages the protrusion 59 of the body frame 52. This engagement between the second lever 62 and the protrusion 59 is maintained by means of the elastic force of the spring 86, whereupon the tray 53 is locked to the body frame 52 (FIG. 7).

The tray 53 can be drawn out of the body frame 52 by depressing an eject button (not shown) on the tray 53. Thereupon, the drive of the spindle motor 54 is stopped, and the drive of the thread motor 72 is then started to rotate the feed screw 73. As the feed screw 73 rotates, the head base 57 moves in the tray draw-out direction (that is, to the outer peripheral side in the radial direction of the disc 57). The head base 77 soon runs against the thread chassis 69 and stops. This stop position is a standby position of the head 55. When the head 55 is in the standby position, the roller of the first lever 61 is in contact with the slider 80.

As mentioned before, the thread chassis 69 restrains the head base 77 from moving toward the outer periphery of the disc. According to the World Standards, basic information for head seek is carried on the innermost peripheral side of the disc 57. Normally, therefore, the head 55 is kept on standby on the innermost peripheral side of the disc 57 in order to increase the processing speed. In case where any shock is then applied to the unit 51, the junction 82 can be prevented from shifting its position and causing wrong operation of the lock mechanism 58 if the point of contact between the junction 82 and the lock mechanism 58 is situated on the outer peripheral side of the disc.

If the feed screw 73 further continues to be rotated, thereafter, the slider 80 compresses the spring 83 as it moves in the tray draw-out direction, thereby causing the first lever 61 to rotate in the counterclockwise direction. This counterclockwise rotation of the first lever 61 causes the second lever 62 to rotate in the counterclockwise direction through the medium of the wire 64. In consequence, the engaging claw 63 of the second lever 62 is disengaged from the protrusion 59 of the body frame 52. Thereupon, the tray 53 is unlocked from the protrusion 59, so that it is pushed out in the tray draw-out direction by the elastic force of the ejector spring 60.

As described above, the spring 83 is compressed and reduced in length when the tray 53 is unlocked. Therefore, the size of the unit can be made smaller, as compared with a unit in which a spring is extended when the tray is unlocked.

The thread motor 72 stops before the junction 82 of the slider 80 fully compresses the spring 83, and then slightly reverses and stops at a position where the spring 83 is released from the compression. This position is a standby position of the head 55.

The first lever 61 as a drive operation member and the second lever 62 as an anchor operation member are connected through the wire 64 as a connecting member. Therefore, the first and second levers 61 and 62 can be arranged on the tray 53 without regard to the distance between the two levers 61 and 62. Since the pull by means of the wire 64 is utilized for the transmission of the rotation of the first lever 61 that causes the second lever 62 to rotate, the operation can be transmitted securely.

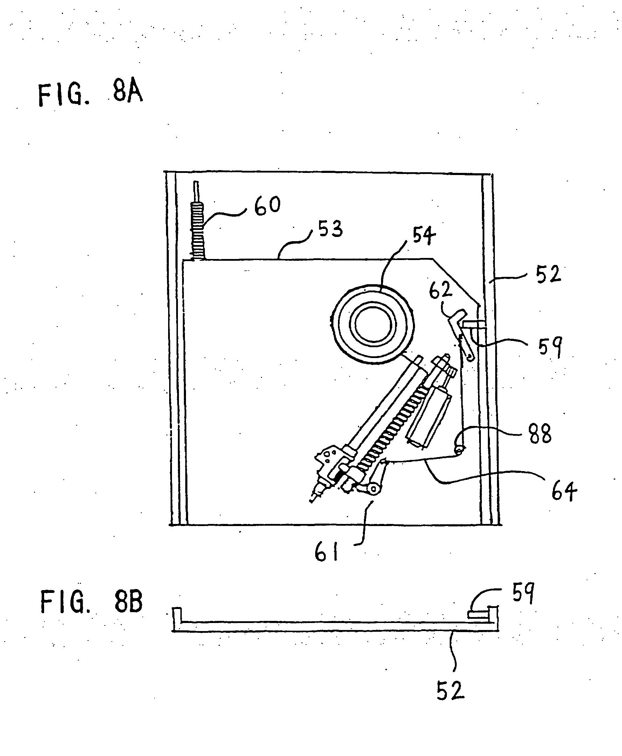

Although the protrusion 59 is formed on the bottom wall of the body frame 52 according to the present embodiment (FIG. 5), it may alternatively be provided on right-hand inside wall of the body frame 52, as shown in FIGS. 8A and 8B. If the protrusion 59 is provided on the sidewall of the body frame 52, it enhances the strength of the body frame 52. Since the protrusion 59 extends parallel to the bottom surface of the body frame 52, moreover, the length of its projection is not restricted by the thickness of the unit 1, so that the unit 51 can be reduced in thickness.

In FIG. 8A, the first and second levers 61 and 62 are connected to each other through the wire 64 the middle of which is guided by a guide roller 88. When the first lever 61 rotates in the counterclockwise direction, therefore, the wire 64 causes the second lever 62 to rotate also in the counterclockwise direction, whereupon the second lever and the protrusion 59 are disengaged from each other.

According to the present embodiment, moreover, both the ejector spring 60, Which pushes the tray 53, which has been pushed into the body frame 52 and situated in the loaded position toward the unloaded position with it elastic force, and the protrusion 59 are arranged on the right-hand side of the disc drive unit 51. Accordingly, the ejector spring 60 and the protrusion 59 acts in the same direction on the tray 53 that is moving toward the loaded position, so that the tray 53 is shaky. As shown in FIG. 8A, therefore, the ejector spring 60 is arranged on the left side of the movement path of the center of rotation of the disc 57, and the protrusion 59 on the right of the movement path. In other words, the ejector spring 60 and the protrusion 59 are arranged on the left and right, respectively, of the center of rotation of the disc 57. By doing this, lateral shaking of the tray 53 which is moving toward the loaded position can be absorbed and lessened.

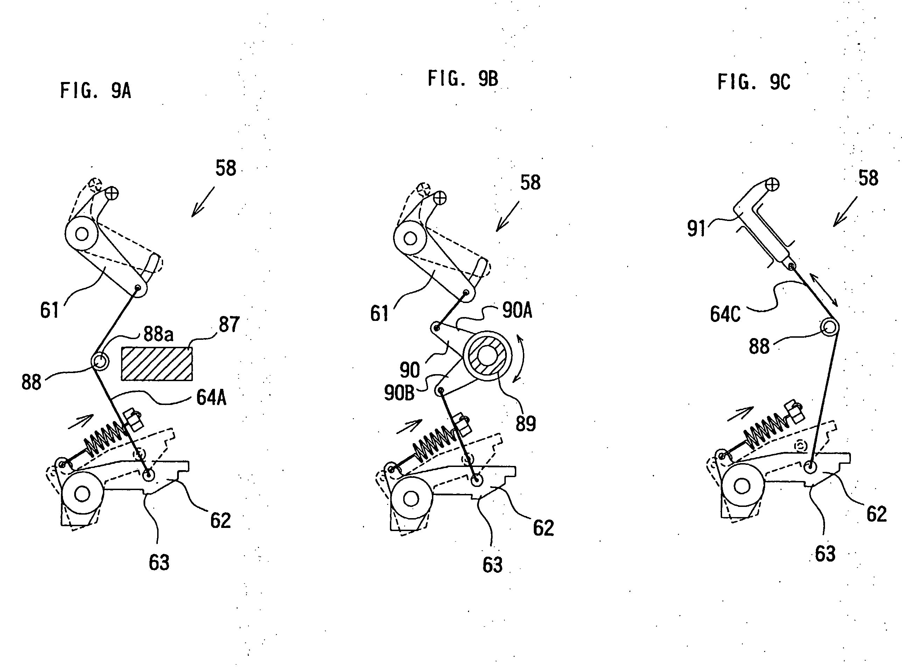

Some other examples related to the lock mechanism will now be described with reference to FIGS. 9A to 9C.

A first example shown in FIG. 9A is applicable to the case where another member 87 that constitutes the unit 51 exists on a straight line that connects the first lever 61 and the second lever 62, so that the levers 61 and 62 cannot be connected to each other through the single wire 64 in such manner as is shown in FIG. 6.

In this example, the guide roller 88 is rotatably supported on a shaft 88a that is fixed to the base 68 of the tray 53, and a connecting member 64A formed of a highly flexible plastic stranded wire or filament is stretched between the first lever 61 and the second lever 62 with the aid of the guide roller 88.

A second example shown in FIG. 9B is applicable to the case where a cylindrical screw hole 88 for fixing the lower cover 71b is formed projecting between the first lever 61 and the second lever 62, so that the levers 61 and 62 cannot be connected to each other through the single wire 64.

In this example, a third lever 90 having two arms 90A and 90B is rotatably supported on the cylindrical screw hole 88. The first lever 61 and one arm 90A of the third lever 90, and also the other arm 90B of the third lever 90 and the second lever 62 are connected through connecting members (such as strings or metallic wires), respectively, whereby the first lever 61 and the second lever 62 are connected at the most efficient angle for the operation.

In a third example shown in FIG. 9C, the first lever 61 of the first example (FIG. 9A) is replaced with a slide bar 91. Since the displacement of the head drive mechanism 56 develops directly as a displacement of a wire 64C, a high efficiency is ensured.

## Claims

1. A disc drive unit which rotates a disc-shaped recording medium and records information in or reproduces information from the disc-shaped recording medium, comprising:
a body frame;
a tray provided on said body frame so as to be movable between an unloaded position and a loaded position;
a lock mechanism for locking said tray in said loaded position or unlocking said tray, thereby allowing said tray to move to said unloaded position;
a screw shaft which has a spiral groove and is driven by a motor to rotate;
a head which is driven by the rotation of said screw shaft and moves in the radial direction of said disc-shaped recording medium, with an engaging member in engagement with said spiral groove positioned and held in a given position by an elastic member, and records information in or reproduces information from the disc-shaped recording medium; and
a stopper member for restraining movement of said head, wherein
said lock mechanism is unlocked by rotating said screw shaft after said head abuts against said stopper member to be restrained from moving, and displacing said engaging member against the urging force of said elastic member.

2. The disc drive unit according to claim 1, wherein said elastic member is a compression coil spring.

3. The disc drive unit according to claim 2, which further comprises at least one guide member for guiding said head in linear sliding motion, said compression coil spring being arranged between the guide member and said screw shaft.

4. The disc drive unit according to any one of claims 1 to 3, wherein said stopper member is provided so as to restrain said head from moving toward the outer periphery of said disc-shaped recording medium.

5. The disc drive unit according to any one of claims 1 to 4, wherein a gear for receiving power transmission from said motor is provided on one end of said screw shaft, while said lock mechanism is arranged on the other end side of the screw shaft.

6. The disc drive unit according to claims 5, wherein said one end of said screw shaft is situated on the inner peripheral side of said disc-shaped recording medium, while said other end of said screw shaft is situated on the outer peripheral side of said disc-shaped recording medium.

7. The disc drive unit according to claim 1, wherein said lock mechanism is composed of a plurality of operation members attached to said tray, and the individual operation members are connected through connecting members so that the operation members can operate in association with one another, and further the operation members include one drive operation member adapted to operate when driven by a drive mechanism and one anchor operation member adapted to anchor said tray in the loaded position when in engagement with an anchor member provided on said body frame.

8. The disc drive unit according to claim 7, wherein said body frame has a bottom plate and a sidewall, and said anchor member is formed integrally with said sidewall of said body frame.

9. The disc drive unit according to claim 7 or 8, wherein said screw shaft is arranged in a position at a distance from the center of rotation of said disc-shaped recording medium on the tray draw-out side, and said anchor member is arranged in a position near the center of rotation of said disc-shaped recording medium, beyond said screw shaft.

10. The disc drive unit according to any one of claims 7 to 9, wherein a spring member for urging said tray to move in the tray draw-out direction is interposed between said body frame and said tray, the spring member and said anchor member being situated on the left- and right-hand sides or on the right- and left-hand sides in the tray draw-out direction, respectively, with respect to the center of rotation of said disc-shaped recording medium.

11. A disc drive unit which rotates a disc-shaped recording medium to record information in or reproduce information from the disc-shaped recording medium, comprising:
a body frame;
a tray provided on said body frame so as to be movable between an unloaded position and a loaded position; and
a lock mechanism for locking said tray in said loaded position or unlocking said tray, thereby allowing said tray to move to said unloaded position,
wherein said lock mechanism has a plurality of operation members attached to said tray, the individual operation members are connected through connecting members so that the operation members can operate in association with one another, and these operation members include at least one drive operation member adapted to operate when driven by drive means and at least one engaging operation member adapted to anchor said tray in the loaded position when in engagement with an anchor member provided on said body frame.

12. The disc drive unit according to claim 11, wherein said drive operation member linearly slides in operation.

13. The disc drive unit according to claim 11, wherein said drive operation member rotates around a rotating shaft attached to the tray in operation.

14. The disc drive unit according to claim 11, wherein said anchor operation member linearly slides between a position in engagement with said anchor member and a position not in engagement with said anchor member.

15. The disc drive unit according to claim 11, wherein said anchor operation member rotates around a rotating shaft attached to the tray in operation.

16. The disc drive unit according to claim 11, wherein said connecting members are easily deformable stringy members.

17. The disc drive unit according to claim 11, wherein said connecting members are formed of metallic wire members.

18. The disc drive unit according to claim 11, wherein said drive means is a head drive mechanism for driving a head for writing information in or reading information from said disc-shaped recording medium.

19. A disc drive unit which rotates a disc-shaped recording medium to record information in or reproduce information from the disc-shaped recording medium, comprising:
a body frame;
a tray provided on said body frame so as to be movable along guide rails between an unloaded position and a loaded position;
a lock mechanism for locking said tray in said loaded position or unlocking said tray, thereby allowing said tray to move to said unloaded position; and
a spring member for urging said tray toward said unloaded position, wherein
said lock mechanism and said spring member are arranged individually on the opposite sides with respect to the center of rotation of said disc-shaped recording medium.

20. The disc drive unit according to claim 19, wherein said lock mechanism and said spring member are provided on said tray.
